Europäisches Patentamt

(19) **European Patent Office**

Office européen des brevets

(11) Numéro de publication: **0 078 217**
**B1**

(12) **FASCICULE DE BREVET EUROPEEN**

(45) Date de publication du fascicule du brevet:
31.07.85

(21) Numéro de dépôt: **82401963.2**

(22) Date de dépôt: **26.10.82**

(51) Int. Cl.⁴: **A 01 D 34/00, A 01 D 43/00**

(54) Perfectionnements apportés aux machines agricoles ou analogues, et notamment aux tondeuses, pour couper et/ou ramasser des particules de végétaux.

(30) Priorité: **26.10.81 FR 8120056**

(43) Date de publication de la demande:
**04.05.83 Bulletin 83/18**

(45) Mention de la délivrance du brevet:
**31.07.85 Bulletin 85/31**

(84) Etats contractants désignés:
**AT BE CH DE GB IT LI NL SE**

(56) Documents cités:
**DE - A - 1 582 399**
**FR - A - 2 174 859**
**FR - A - 2 235 639**
**FR - A - 2 352 485**
**GB - A - 1 358 978**
**US - A - 3 222 853**
**US - A - 3 242 658**
**US - A - 3 641 754**
**US - A - 3 791 118**
**US - A - 3 846 963**

(73) Titulaire: **CARROY GIRAUDON, Zone Industrielle Route de Foecy, F-18100 Vierzon (FR)**

(72) Inventeur: **Millot, André Jean Henri, 24, rue du Panorama, F-18110 Vierzon (FR)**

(74) Mandataire: **Gorree, Jean-Michel et al, Cabinet Plasseraud 84, rue d'Amsterdam, F-75009 Paris (FR)**

BUNDESDRUCKEREI BERLIN

## Description

La présente invention concerne des perfectionnements apportés aux machines agricoles ou analogues comportant un châssis supportant un organe actif pour couper et/ou ramasser des particules de végétaux et un dispositif convoyeur à vis sans fin pour acheminer lesdites particules de végétaux depuis l'organe actif jusqu'à un bac de récupération situé en position surélevée par rapport à ce dernier, le dispositif convoyeur débouchant dans la région centrale de la partie inférieure du bac. Elle vise plus particulièrement, mais non exclusivement, des perfectionnements apportés à des matériels du genre en question tels que des tondeuses agencées pour la coupe et le ramassage d'herbes, de gazon ou analogue.

Par le brevet US-A-3 641 754, il est connu une machine du type précité, dans laquelle le bac de récupération est constitué sous forme cylindrique de révolution, possède un diamètre à peine supérieur à celui de la vis sans fin du dispositif convoyeur et est disposé coaxialement dans le prolongement de cette vis sans fin, l'axe commun à la vis sans fin et au réservoir étant incliné vers l'arrière de la machine.

L'inclinaison de l'ensemble constitué par la vis sans fin et le bac de récupération allonge considérablement la machine au-delà de l'essieu arrière et, au moins lorsque le bac est rempli, ce porte-à-faux entraîne une instabilité de la machine qui rend sa conduite difficile. En outre, le volume du bac est insuffisant pour effecteur, sans vidange, des travaux importants et sa vidange nécessite son détachement du carter entourant la vis sans fin, suivi de manipulations peu commodes au cours desquelles son contenu risque d'être en partie renversé.

Un compactage de particules coupées est également obtenu dans la machine décrite dans la demande de brevet GB-A-1 358 978, dans laquelle une vis sans fin introduit l'herbe coupée à la base d'un bac de récupération, à travers un orifice qui est situé le long d'un bord du fond du bac, donc en position excentrée. L'entassement des particules dans un bac ainsi agencé ne peut pas être effectué de façon homogène et régulièrement étalé et il en résulte un défaut d'équilibrage de la machine lorsque le bac est rempli.

L'invention a donc essentiellement pour but de remédier aux inconvénients susmentionnés et de perfectionner les machines du genre en question pour qu'elles répondent mieux que jusqu'à présent aux diverses exigences de la technique, en faisant en sorte notamment que les particules de végétaux soient tassées de façon automatique dans le bac de récupération pour augmenter la capacité de stockage de celui-ci ainsi que l'autonomie de ramassage de la machine.

A ces fins, on prévoit que le bac est situé au-dessus de l'organe actif de coupe et/ou de Ramassage et supporte par le châssis par l'intermédiaire d'un axe de rotation de manière à pouvoir être basculé pour sa vidange en étant alors dissocie de l'ensemble composé de l'organe actif de coupe et/ou de Ramassage et du dispositif convoyeur à vis sans fin, et que la vis sans fin du dispositif convoyeur s'étend sensiblement verticalement sous le bac de récupération.

Grâce à cet agencement, le dispositif convoyeur à vis sans fin force les particules de végétaux à pénétrer dans le bac de récupération à l'encontre de la force antagoniste constituée par le poids des particules de végétaux déjà stockées dans ledit bac, ce qui procure un tassement automatique des particules de végétaux dans le bac et permet d'accroître la capacité de stockage de celui-ci.

On peut éventuellement envisager de recourir à des moyens de tassement supplémentaire situés dans le bac de récupération et aptes à accroître le tassement des particules de végétaux stockées, ces moyens pouvant par exemple comprendre des liens lestés, notamment un filet lesté, s'étendant de façon lâche entre les parois du bac de récupération.

Pour améliorer le fonctionnement de la machine, entre l'organe actif et le dispositif convoyeur à vis sans fin, on peut prévoir des moyens de collecte, notamment au moins une vis sans fin, pour amener les particules des végétaux coupés et/ou ramassés par l'organe actif à l'entrée du dispositif convoyeur.

Dans un mode de réalisation préféré mettant cette disposition en application, les moyens de collecte comprennent au moins deux vis sans fin qui s'étendent sensiblement horizontalement, sensiblement parallèlement à l'organe actif, qui sont coaxiales ou d'axes sensiblement parallèles l'une à l'autre, qui s'étendent de part et d'autre de la vis sans fin du dispositif convoyeur et qui agissent en sens inverse l'une de l'autre.

L'invention sera mieux comprise à la lecture de la description détaillée qui suit de certains de ses modes de réalisation donnés uniquement à titre illustratif et dans laquelle on se réfère au dessin ci-annexé dans lequel:

— la figure 1 est une vue de côté, en coupe, d'une tondeuse à fléaux agencée conformément à l'invention; et

— la figure 2 est une vue de face en coupe selon la ligne II-II de la figure 1.

Une machine agricole ou analogue, désignée dans son ensemble par la référence numérique 1, comporte un châssis 2 reposant sur des roues 3 et supportant un bac de récupération 4 pour les végétaux.

A l'avant de la machine (le sens de circulation étant figuré par la flèche 5) se trouve un organe actif 6, qui peut être par exemple un organe de coupe de végétaux et/ou un organe de ramassage de végétaux coupés. Quel que soit son type, l'organe actif 6 est agencé pour que les végétaux coupés soient rejetés dans un carter 7 faisant office de collecteur. Le carter 7, comme représenté, entoure la partie arrière de l'organe actif 6 et possède approximativement la forme générale d'un entonnoir dont le fond, tourné vers l'arrière, présente une ouverture 8 pour l'évacuation des végétaux coupés recueillis par l'organe actif 6.

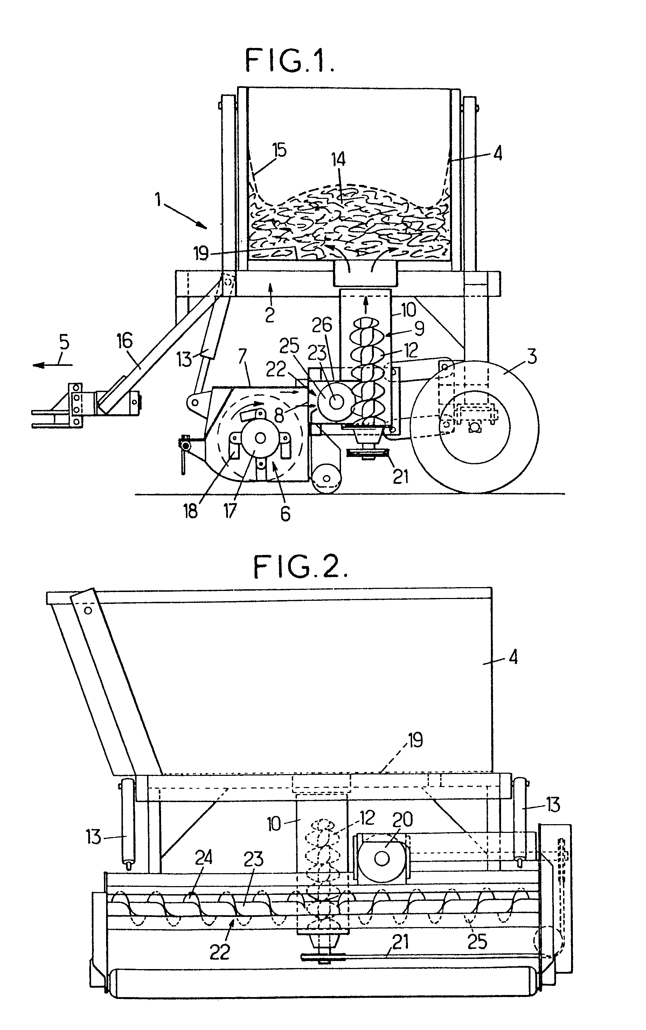

A titre d'exemple, la machine des figures 1 et 2 est une broyeuse à fléaux destinée à être tractée, par exemple par un tracteur ou un motoculteur, et agencée pour la coupe, la division en débris de petites dimensions et le ramassage de végétaux, notamment de l'herbe, du gazon ou des feuilles mortes.

Le châssis 2 repose donc, à l'arrière, sur une paire de roues 3 et est muni, à l'avant, d'une barre d'accouplement 16. L'organe actif 6 est un dispositif de coupe à rotor 17 d'axe horizontal équipé de couteaux de coupe 18 en forme de fléaux.

Ce dispositif de coupe s'étend sur une longueur relativement importante, comme visible plus particulièrement à la figure 2, et le carter 7 abritant ledit dispositif de coupe possède une forme d'auge communiquant, vers l'arrière, avec les moyens de transport des végétaux coupés par l'intermédiaire de l'ouverture 8 qui est allongée sensiblement horizontalement.

Le dispositif convoyeur 9 destiné à amener les végétaux coupés dans le bac de récupération 4 est ici disposé sensiblement verticalement et débouche approximativement dans la région centrale du fond 19 du bac de récupération 4. L'entraînement de la vis sans fin 12 s'effectue à partir d'une prise de force 20 par l'intermédiaire d'une courroie 21 et de poulies de renvoi.

Compte tenu de la longueur relative du dispositif de coupe 6 et de l'ouverture 8, il est nécessaire de prévoir, entre ladite ouverture 8 et le dispositif convoyeur vertical 9, un dispositif de collecte 22 permettant de ramener vers le centre de la machine, au voisinage de l'entrée du dispositif convoyeur 9, les végétaux coupés arrivant par l'ouverture 8.

Le dispositif de collecte 22 peut être constitué par deux vis sans fin coaxiales contrarotatives, sensiblement parallèles à l'ouverture et situées en arrière de celle-ci de part et d'autre de la vis sans fin verticale 12. On peut également envisager, comme représenté aux figures 1 et 2, un agencement plus simple comprenant un arbre unique 23 parallèle à l'ouverture 8 et portant, de part et d'autre de la vis sans fin 12, deux vis sans fin 24, 25 d'enroulements inverses. L'entraînement du dispositif collecteur 22 peut être obtenu de la même manière que celui du dispositif convoyeur 9, à partir de la prise de force 20.

Grâce à cet agencement, les végétaux, coupés ou ramassés par l'organe actif 6, sont projetés vers l'arrière du carter 7 où ils sont repris et entraînés par les vis de collecte 23, 24, puis par la vis sans fin 12. Cette dernière les introduit à force, à son extrémité de sortie, dans le bac de récupération 4 à l'encontre de l'effort résistant constitué par le poids des végétaux 14 déjà stockés. Il en résulte un tassement des végétaux dans le bac 4 conduisant à accroître de façon sensible la capacité de stockage dudit bac.

En outre, compte tenu de l'action d'entraînement exercé par la vis sans fin 12 sur les végétaux coupés tout au long du conduit 10, on est assuré que la totalité des végétaux est entraînée et qu'il ne peut pas se former de dépôts de végétaux sur les parois du conduit, même si les végétaux coupés sont humides.

Eventuellement, si l'on souhaite accroître le tassement des végétaux dans le bac et surtout pour que le tassement desdits végétaux se produise dès le début du remplissage du bac, on peut prévoir des moyens de tassement auxiliaire. Avantageusement, il peut s'agir de moyens pesants tels que des liens lestés disposés de façon lâche à l'intérieur du bac. Sur la figure 1, on a utilisé un filet lesté 15.

Pour simplifier la fabrication de la machine, on peut concevoir différentes parties sous forme de blocs ou modules assemblés les uns aux autres. En particulier, le dispositif de coupe 6 et son carter 7 peuvent constituer un premier bloc, assemblé à un deuxième bloc réunissant le dispositif convoyeur vertical 9 (vis sans fin 12 et conduit 10) et le dispositif collecteur horizontal (vis sans fin 24, 25 et carter 26 solidaire du conduit 10), le bac de récupération 4 (par exemple constitué sous forme d'une benne basculable) constituant un troisième bloc, tous les blocs étant assemblés au châssis.

## Revendications

1. Machine agricole ou analogue comportant un châssis (2) supportant un organe actif (6) pour couper et/ou ramasser des particules de végétaux et un dispositif convoyeur (9) à vis sans fin pour acheminer lesdites particules de végétaux depuis l'organe actif jusqu'à un bac de récupération (4) situé en position surélevée par rapport à ce dernier, le dispositif convoyeur (9) débouchant dans la région centrale de la partie inférieure (19) du bac (4), caractérisée en ce que le bac (4) est situé au-dessus de l'organe actif (6) de coupe et/ou de Ramassage et est supporté par le châssis (2) par l'intermédiaire d'un axe de rotation de manière à pouvoir être basculé pour sa vidange en étant alors dissocié de l'ensemble composé de l'organe actif de coupe et/ou de Ramassage et du dispositif convoyeur à vis sans fin et en ce que la vis sans fin (12) du dispositif convoyeur (9) s'étend sensiblement verticalement sous le bac de récupération (4).

2. Machine agricole selon la revendication 1, caractérisée en ce qu'il est prévu, dans le bac de récupération, des moyens de tassement supplémentaires (15) aptes à accroître le tassement des particules de végétaux stockées.

3. Machine agricole selon la revendication 2, caractérisée en ce que les moyens de tassement supplémentaire comprennent des liens lestés s'étendant de façon lâche entre les parois latérales du bac de récupération.

4. Machine agricole selon la revendication 3, caractérisée en ce que les moyens de tassement supplémentaire comprennent un filet lesté à mailles fines.

5. Machine agricole selon l'une quelconque des revendications 1 à 4, caractérisée en ce qu'entre l'organe actif (6) de coupe et/ou de Ramassage et le dispositif convoyeur (9) à vis sans fin il est prévu des moyens de collecte (22) pour amener les particules des végétaux coupés et/ou ramassés par l'organe actif (6) à l'entrée du dispositif convoyeur (6).

6. Machine agricole selon la revendication 5, caractérisée en ce que les moyens de collecte comprennent au moins une vis sans fin, d'une façon en soi connue.

7. Machine agricole selon l'une quelconque des revendications 5 et 6, caractérisée en ce que les moyens de collecte (22) comprennent au moins deux vis sans fin (24, 25) qui s'étendent sensiblement horizontalement, sensiblement parallèlement à l'organe actif, qui sont coaxiales ou d'axes sensiblement parallèles l'une à l'autre, qui s'étendent de part et d'autre de la vis sans fin du dispositif convoyeur et qui agissent en sens inverse l'une de l'autre.

8. Matériel du genre tondeuse, agencé pour la coupe et le ramassage d'herbes, de gazon ou analogue, caractérisé en ce qu'il est constitué selon l'une quelconque des revendications 1 à 7.

## Patentansprüche

1. Landwirtschaftliche Maschine od. dgl. mit einem Rahmen (2), der ein Werkzeug (6) zum Mähen und/oder Sammeln von Pflanzenteilen und eine Fördervorrichtung (9) mit einer Förderschnecke zum Transport der Pflanzenteile vom Werkzeug bis zu einem Sammelbehälter (4) trägt, welcher gegenüber dem Werkzeug in erhöhter Lage angeordnet ist, wobei die Fördervorrichtung (9) im mittleren Bereich des unteren Teiles (19) des Behälters (4) ausmündet, dadurch gekennzeichnet, daß der Behälter (4) oberhalb des Mäh- und/oder Sammelwerkzeuges (6) angeordnet und vom Rahmen (2) mittels einer Schwenkachse derart abgestützt ist, daß er zu seiner Entleerung geschwenkt werden kann, indem er von der Anordnung aus Mäh- und/oder Sammelwerkzeug und Schneckenfördervorrichtung zugleich getrennt wird, und daß die Schnecke (12) der Fördervorrichtung (9) sich unter dem Sammelbehälter (4) im wesentlichen vertikal erstreckt.

2. Landwirtschaftliche Maschine nach Anspruch 1, dadurch gekennzeichnet, daß im Sammelbehälter zusätzliche Verdichtungsmittel (15) vorgesehen sind, die befähigt sind, die gesammelten Pflanzenteile verstärkt zusammenzudrükken.

3. Landwirtschaftliche Maschine nach Anspruch 2, dadurch gekennzeichnet, daß die zusätzlichen Verdichtungsmittel gewichtsbelastete Ketten aufweisen, die sich in schlaffem Zustand zwischen den Seitenwänden des Sammelbehälters erstrecken.

4. Landwirtschaftliche Maschine nach Anspruch 3, dadurch gekennzeichnet, daß die zusätzlichen Verdichtungsmittel ein gewichtsbelastetes Netz aus feinen Maschen aufweisen.

5. Landwirtschaftliche Maschine nach einem der Ansprüche 1 bis 4, dadurch gekennzeichnet, daß zwischen dem Mäh- und/oder Sammelwerkzeug (6) und der Schneckenfördervorrichtung (9) Sammelmittel (22) angeordnet sind, um die vom Werkzeug (6) abgeschnittenen und/oder gesammelten Pflanzenteile zum Eingang der Fördervorrichtung (9) zu bewegen.

6. Landwirtschaftliche Maschine nach Anspruch 5, dadurch gekennzeichnet, daß die Sammelmittel in an sich bekannter Weise zumindest eine Schnecke aufweisen.

7. Maschine nach Anspruch 5 oder 6, dadurch gekennzeichnet, daß die Sammelmittel (22) zumindest zwei Schnecken (24, 25) aufweisen, die sich im wesentlichen horizontal und im wesentlichen parallel zum Werkzeug erstrecken, wobei die Schnecken zueinander koaxial oder mit im wesentlichen parallelen Achse angeordnet sind, sich zu beiden Seiten der Schnecke der Fördervorrichtung erstrecken und gegensinnig arbeiten.

8. Gerät nach Art eines Mähers, das zum Schneiden und Sammeln von Kräutern, Rasen od. dgl. ausgebildet ist, dadurch gekennzeichnet, daß es nach einem der Ansprüche 1 bis 7 ausgebildet ist.

## Claims

1. An agricultural machine or similar comprising a frame (2) supporting an active member (6) for cutting and/or gathering up plant particles, and an endless screw conveyor device (9) for conveying said plant particles from the active member to a recovery tank (4) located in a heightened position in relation to said active member, the conveyor device (9) opening out into the central region of the lower part (19) of the recovery tank (4), characterized in that the recovery tank (4) is located above the active member (6) for cutting and/or gathering up and is supported by the frame (2) through a rotation axis so as to be tippable for being emptied while being disengaged from the assembly consisting of the active member for cutting and/or gathering up and the endless screw conveyor device, and in that the endless screw (12) of the conveyor device (9) extends substantially vertically under the recovery tank (4).

2. The agricultural machine according to claim 1, characterized in that there are provided, in the recovery tank, additional packing means (15) adapted to increase the packing of the stored plant particles.

3. The agricultural machine according to claim 2, characterized in that the additional packing means comprise weighted ties extending loosely between the lateral walls of the recovery tank.

4. The agricultural machine according to claim 3, characterized in that the additional packing means comprise a fine mesh weighted net.

5. The agricultural machine according to anyone of claims 1 to 4, characterized in that between the active member (6) for cutting and/or gathering up and the endless screw conveyor device (9) there are provided collecting means (22) for bringing the plants cut and/or gathered up by the active member (6) to the entrance of the conveyor device (9).

6. The acricultural machine according to claim 5, characterized in that the collecting means comprise at least one endless screw, in a way known per se.

7. The agricultural machine according to anyone of claims 5 and 6, characterized in that the collecting means (22) comprise at least two endless screws (24, 25) which extend substantially horizontally, substantially parallel to the active member, which are coaxial or have axes substantially parallel to each other, which extend on each side of the endless screw of the conveyor device and which act in opposite directions to each other.

8. Equipment of the moving kind, adapted for cutting and gathering up grasses, lawn grass or similar, characterized in that it is constitued according to anyone of claims 1 to 7.

## FIG.1.

## FIG.2.